(19) Europäisches Patentamt
European Patent Office
Office européen des brevets

(11) Veröffentlichungsnummer: **0 024 609**
**B1**

# (12) EUROPÄISCHE PATENTSCHRIFT

(45) Veröffentlichungstag der Patentschrift: **12.01.83**

(51) Int. Cl.³: **C 09 B 67/26,** C 09 B 45/01

(21) Anmeldenummer: **80104712.7**

(22) Anmeldetag: **09.08.80**

(54) **Verfahren zur Herstellung von konzentrierten Lösungen sulfogruppenfreier Metallkomplexfarbstoffe.**

(30) Priorität: **22.08.79 DE 2934015**

(43) Veröffentlichungstag der Anmeldung: **11.03.81 Patentblatt 81/10**

(45) Bekanntmachung des Hinweises auf die Patenterteilung: **12.01.83 Patentblatt 83/2**

(84) Benannte Vertragsstaaten: **CH DE FR GB IT LI**

(56) Entgegenhaltungen:
**DE-A-2 605 574**
**DE-A-2 634 512**
**DE-B-1 619 470**
**FR-A-1 559 025**
**FR-A-2 285 441**
**FR-A-2 388 864**

**Die Akte enthält technische Angaben, die nach dem Eingang der Anmeldung eingereicht wurden und die nicht in dieser Patentschrift enthalten sind.**

(73) Patentinhaber: **BAYER AG, Zentralbereich Patente, Marken und Lizenzen, D-5090 Leverkusen 1, Bayerwerk (DE)**

(72) Erfinder: **Scholl, Walter, Dr., Bilharzstrasse 22, D-5000 Köln 80 (DE)**
Erfinder: **Schündehütte, Karl Heinz, Dr., Klief 75, D-5090 Leverkusen 3 (DE)**
Erfinder: **Mennicke, Winfried, Dr., Steglitzer Strasse 8, D-5090 Leverkusen (DE)**

EP 0 024 609 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Verfahren zur Herstellung von konzentrierten Lösungen sulfogruppenfreier Metallkomplexfarbstoffe

Gegenstand der vorliegenden Erfindung ist ein Verfahren zur Herstellung konzentrierter, ggf. wasserhaltiger Lösungen von sulfogruppenfreien Metallkomplexfarbstoffen in Monoalkyläthern mehrwertiger Alkohole, dadurch gekennzeichnet, dass man in eine Mischung aus Metallkomplexfarbstoff, Wasser und einem Mono-$C_3$-$C_4$-Alkyläther eines mehrwertigen Alkohols sowie ggf. einem wassermischbaren Carbonsäureamid durch Zusatz von anorganischen Salzen - insbes. bei erhöhter Temperatur - eine Phasentrennung durchführt und die organische Phase abtrennt.

Geeignete Äther sind insbesondere die Mono-$C_3$-$C_4$-Alkyläther des Äthylenglykols und Propylenglykols und die $C_3$-$C_4$-Alkyläther der entsprechenden Polyglykole. Bevorzugt sind dabei die n-Propyl- und n-Butyläther, insbes. der Butylglykoläther und der Butyldiglykoläther.

Die Lösungen können wassermischbare Carbonsäureamide wie Dimethylformamid oder N-Methylpyrrolidon in Mengen von 0-30 Gew.% enthalten.

Geeignete anorganische Salze sind bspw. Natriumchlorid und Natriumsulfat. Das Verfahren findet insbesondere Anwendung für folgende Farbstoffklassen: Sulfogruppenfreie 1:2-Cr- bzw. 1:2-Co-Komplex Azo- oder Azomethinfarbstoffe, insbesondere solchen der Benzol- bzw. Naphthalin-azo-benzol, azo-naphthalin, azo-pyrazolon- oder azoacetessigarylid-Reihe.

Das Verfahren kann in verschiedener Weise durchgeführt werden, insbesondere als Eintopfreaktion, beginnend mit der Kupplung des Farbstoffs, wobei zunächst in Gegenwart der obigen Lösungsmittel und Wasser gekuppelt, anschliessend metallisiert und danach die Phasentrennung durchgeführt wird.

Man kann selbstverständlich auch den in üblicher Weise hergestellten metallfreien Farbstoff in Form des Presskuchens oder getrocknet, mit Wasser und Lösungsmittel versetzen, metallisieren und anschliessend die Phasentrennung durchführen.

Schliesslich kann man auch so verfahren, dass man (bspw. gemäss DE-A-2605574) in weitgehend wasserfreiem Medium metallisiert, mit Wasser und ggf. Salz versetzt, erhitzt und trennt.

Weiterhin kann man den isolierten Metallkomplexfarbstoff in Form des wasserhaltigen Presskuchens oder in trockener Form mit Lösungsmittel, Wasser und Salz versetzen und wie oben beschrieben weiterarbeiten.

Die hochkonzentrierten Lösungen enthalten 20-40% Farbstoff, bevorzugt 20-30% (als reiner Farbstoff gerechnet) bezogen auf die Gesamtmenge der Lösung.

Die erfindungsgemäss erhaltenen Lösungen sind im Temperaturbereich zwischen etwa -20°C und 50°C über längere Zeit (mehrere Monate) lagerstabil.

Das Verhältnis Wasser/Lösungsmittel liegt im allgemeinen bei etwa 1:10, bis 10:1, vorzugsweise jedoch im Bereich 2-4:1.

Die Trennung der Farbstoff enthaltenden Lösungsmittelphase von der wässrigen Phase wird vorzugsweise bei etwa 60-100°C vollzogen, insbesondere bei 80-90°C.

Ist im Reaktionsansatz von der Herstellung her nicht genügend Salz zur Phasentrennung vorhanden, so trägt man soviel Natriumchlorid oder Natriumsulfat ein, dass in der wässrigen Phase nach der Phasentrennung 50-250 g/l vorhanden ist. Bevorzugt ist ein Wert von etwa 150 g/l.

Die konzentrierten Farbstofflösungen enthalten im allgemeinen nur geringe Mengen Wasser, meist weniger als 10%.

In der DE-B-2634512 wird ein Verfahren zur Herstellung konzentrierter Lösungen von sulfogruppenfreien Metallkomplexfarbstoffen beschrieben, bei dem in einem Medium aus Wasser und einem Glykolester bzw. Glykolätherester, das ggf. noch Glykolmonoäther enthalten kann, metallisiert und anschliessend in Gegenwart von Salzen eine Phasentrennung durchgeführt wird. Überraschenderweise ergeben sich bei dem erfindungsgemässen Verfahren Vorteile bei der Phasentrennung.

Beispiel 1

2 Mol 4-Nitro-2-aminophenol werden in einer Mischung aus 1800 g Eis und 350 ml Salzsäure conc. verrührt und im Verlaufe von 20 Minuten mit 460 ml Natriumnitritlösung 30 V%ig versetzt. Man rührt die Diazotierung 30 Minuten bei 0-5°C und zerstört überschüssiges Nitrit mit Amidosulfonsäure.

2 Mol Acetessiganilid werden in 2500 ml Diäthylenglykolmonobutyläther gelöst, mit Aussenkühlung auf 0°C gekühlt und mit 1800 g Eis versetzt. Man lässt die Diazotierung zulaufen in etwa 20 Minuten und stellt mit ca. 550 ml Natronlauge 40 V%ig auf pH 9,8. Nach 2-3 Stunden Rühren bei 5-10°C ist die Kupplung beendet.

Die Kupplungslösung wird auf 60°C erwärmt, mit ca. 7 ml Salzsäure conc. auf pH 7 gestellt. Dann lässt man im Verlauf von 20 Minuten eine Lösung aus 1 Mol $CoSO_4 \cdot 7H_2O$ und 460 ml Wasser zulaufen, wobei man den pH durch Zugabe von insgesamt ca. 90 ml Natronlauge 40 V%ig konstant bei 6,5-7 hält. Man lässt 2 Stunden nachrühren, streut 1400 g Natriumchlorid ein, rührt weitere 30 Minuten und klärt mit einem Filterhilfsmittel. Dann trennt man bei 60°C die untere wässrige Schicht, die praktisch keinen Farbstoff enthält, von der organischen Schicht ab. Man erhält eine Farbstofflösung mit einem Farbstoffgehalt von ca. 22%.

Beispiel 2

0,29 Mol 5-Nitro-2-aminophenol und 0,29 Mol 4-Nitro-2-aminophenol werden in 200 ml Wasser und 100 ml Salzsäure conc. verrührt und auf 40-50°C erwärmt. Die Lösung wird mit 400 g Eis

versetzt und bei 0–5°C mit 134 ml Natriumnitritlösung 30 V%ig diazotiert.

0,58 Mol β-Naphthol werden in 600 ml Glykolbutyläther (Butylglykol) gelöst und mit 400 g Eis und 70 ml Natronlauge 40 V%ig versetzt. Dann lässt man die Diazotierung zulaufen, wobei man den pH-Wert mit ca. 15 ml Natronlauge 40 V%ig bei 9,5–10 hält. Nach 15 Stunden ist die Kupplung beendet.

Die Farbstoffsuspension wird mit ca. 32 ml Salzsäure conc. auf pH 7–7,5 gestellt und auf 60°C erwärmt. Dann lässt man 212 g Chromacetatlösung ($Cr_2O_3$-Gehalt 10,4%) zulaufen, gibt 55 g Natriumacetat wasserfrei hinzu und erhitzt 5 Stunden unter Rückfluss. Dann stellt man den pH-Wert durch Zugabe von ca. 50 ml Natronlauge 40 V%ig von 4,3–4,5 auf pH 5,5–6 und rührt nochmals 2 Stunden unter Rückfluss. Nach Beendigung der Chromierung lässt man auf 95°C abkühlen, versetzt den Ansatz mit 450 g Natriumchlorid und 20 g Filterhilfsmittel und klärt bei 80–85°C. In einem Scheidetrichter lässt sich die untere wässrige Phase bei 70°C leicht von der organischen Farbstofflösung abtrennen. Man erhält eine stabile Farbstofflösung mit einem Gehalt von ca. 24% Reinfarbstoff.

Ganz analog erhält man bei Verwendung der entsprechenden Ausgangsverbindungen konz. Lösungen folgender Farbstoffe:

Beispiel 3
Mischchromierung der Farbstoffe

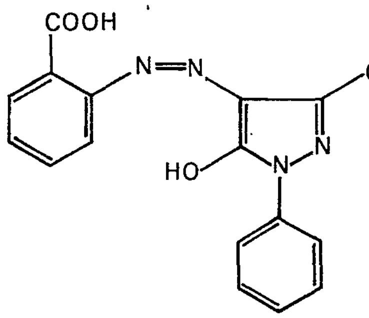

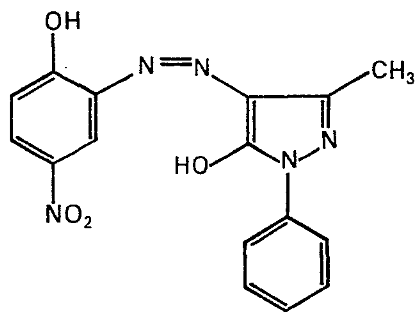

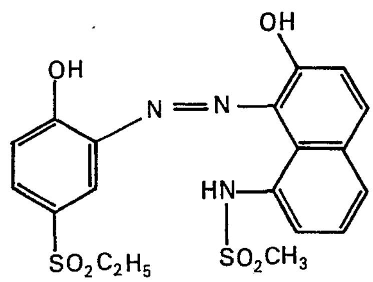

im Molverhältnis 0,29:0,232:0,058
Gelbbraun

Beispiel 4
Mischchromierung der Farbstoffe

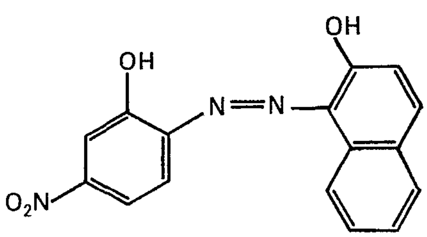

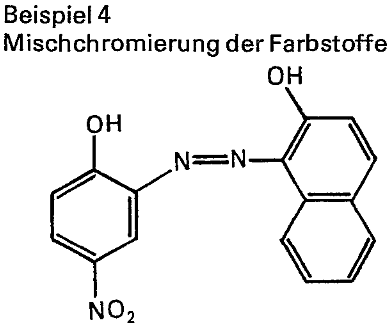

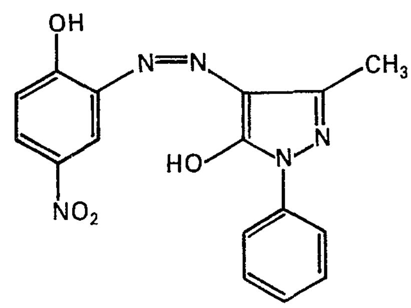

im Molverhältnis 5,62:7,52:20,0
Dunkelbraun

Beispiel 5
Mischchromierung der Farbstoffe

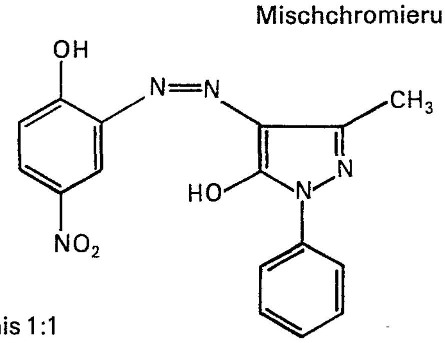

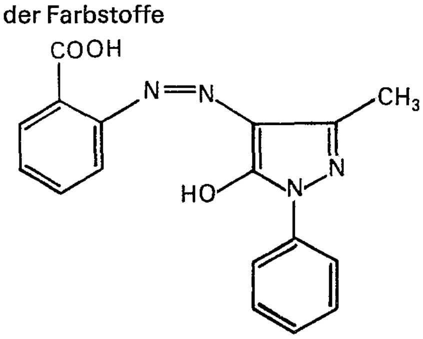

im Molverhältnis 1:1
Orange

Beispiel 6
Mischchromierung der Farbstoffe

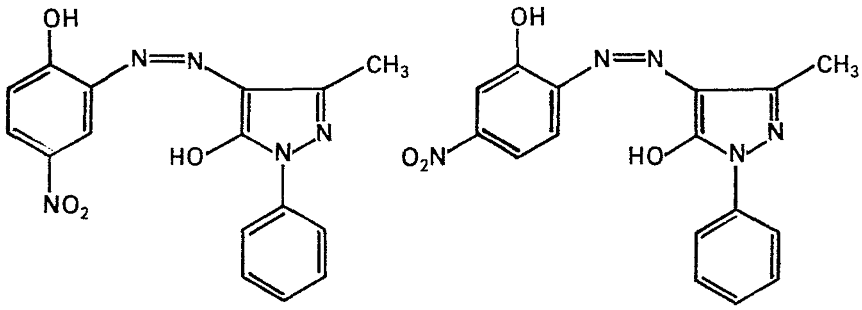

im Molverhältnis 1:1
Rot

Beispiel 7
Mischchromierung der Farbstoffe

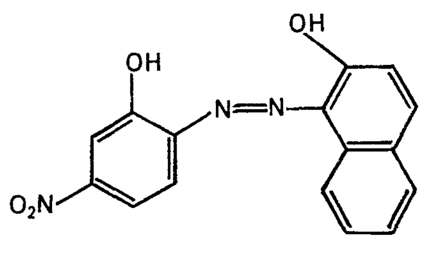

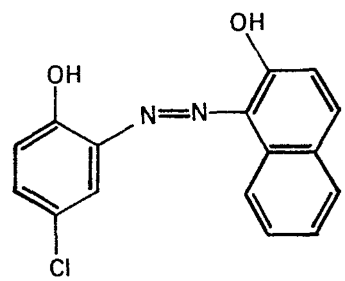

im Molverhältnis 1:1
Marineblau

Beispiel 8
Chromierung des Farbstoffs

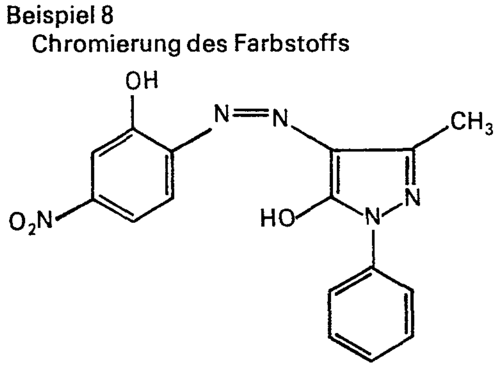

Rubin

Beispiel 9
1 Mol 2-Aminophenol-4-äthylsulfon (HCl-Salz) wird in 300 ml Wasser, 28 ml Salzsäure conc. und 650 g Eis verrührt und bei 0-5°C mit 230 ml Natriumnitritlösung 30 V%ig diazotiert.

1 Mol 1-Methylsulfonylamino-7-hydroxy-naphthalin wird in 1400 ml Diäthylenglykolmonobutyläther gelöst, mit 900 g Eis versetzt. Dann gibt man 184 ml Natronlauge 40 V%ig hinzu, lässt die Diazotierungslösung zulaufen und rührt 3 Stunden bei pH 11 und 5-10°C nach.

Nach beendeter Kupplung wird mit ca. 92 ml Salzsäure conc. auf pH 7 gestellt und auf 60°C erwärmt. Dann gibt man 379,6 g Chromacetatlösung ($Cr_2O_3$-Gehalt 10,9%) und 92 g Natriumacetat wasserfrei hinzu und rührt 5 Stunden unter Rückfluss. Dann stellt man den pH durch Zugabe von Natronlauge auf 5,5 und rührt eine weitere Stunde unter Rückfluss.

Man lässt auf 90°C abkühlen, trägt 780 g Natriumchlorid und 20 g eines Filterhilfsmittels ein und klärt. Bei 70°C trennt man die wässrige Phase ab. Man erhält eine stabile Farbstofflösung mit einem Farbstoffgehalt von ca. 24%.

**Patentanspruch**

Verfahren zur Herstellung konzentrierter, ggf. wasserhaltiger Lösungen von sulfogruppenfreien Metallkomplexfarbstoffen in Monoalkyläthern mehrwertiger Alkohole, dadurch gekennzeichnet, dass man in einer Mischung aus Metallkomplexfarbstoff, Wasser und einem Mono-$C_3$-$C_4$-Alkyläther eines mehrwertigen Alkohols sowie ggf. einem wassermischbaren Carbonsäureamid durch Zusatz von anorganischen Salzen - insbes. bei erhöhter Temperatur - eine Phasentrennung durchführt und die organische Phase abtrennt.

**Claim**

Process for the preparation of concentrated solutions, optionally containing water, of metal complex dyestuffs which are free from sulpho groups, in monoalkyl ethers of polyhydric alcohols, characterised in that phase separation is effected in a mixture of the metal complex dyestuff, water and a mono-$C_3$-$C_4$-alkyl ether of a polyhydric alcohol as well as, optionally, a water-miscible carboxylic acid amide by adding inorganic salts - in particular at elevated temperature - and the organic phase is separated off.

**Revendication**

Procédé pour la préparation de solutions concentrées, contenant éventuellement de l'eau, de colorants complexes métalliques exempts de groupes sulfo dans des monoéthers d'alkyle de polyalcools, caractérisé en ce que l'on effectue une séparation de phase dans un mélange du colorant complexe métallique, d'eau et d'un monoéther d'alkyle en $C_3$–$C_4$ d'un polyalcool, ainsi éventuellement que d'un amide d'acide carboxylique miscible avec l'eau, par addition de sels inorganiques – en particulier à température élevée – et on sépare la phase organique.